# EUROPÄISCHE PATENTANMELDUNG

(11) **EP 2 639 738 A1**
(43) Veröffentlichungstag der Anmeldung: **18.09.2013**
(21) Anmeldenummer: 12159137.4
(22) Anmeldetag: 13.03.2012
(51) Int. Cl.: G06K 7/10

(54) **Verfahren und Lesegerät zur Erfassung einer Mehrzahl nacheinander auf eine Anzeigevorrichtung dargestellter zweidimensionaler Codes**

(71) Anmelder: Siemens Aktiengesellschaft, 80333 München (DE)
(72) Erfinder: Mamaladze, George, 90409 Nürnberg (DE); Mehrmann, Lars, 90579 Langenzenn (DE)

(57) **Zusammenfassung**

Die Erfindung betrifft ein Verfahren, ein Lesegerät und ein Computerprogrammprodukt zur Erfassung einer Mehrzahl nacheinander auf einer Anzeigevorrichtung dargestellter zweidimensionaler Codes (Frame_1A, ..., Frame_2B), wobei die zweidimensionalen Codes (Frame_1A, ..., Frame_2B) mittels einer Mehrzahl Aufnahmen (P1, ..., P17) einer Kamera erfasst und mittels einer Auswerteinrichtung decodiert werden. Dabei ist eine Aufnahmerate der Kamera bei der Erfassung der Aufnahmen (P1, ..., P17) mit den Codes (Frame_1A, ..., Frame_2B) höher als eine Wechselrate der dargestellten Codes (Frame_1A, ..., Frame_2B), wobei bei einem Wechsel des dargestellten Codes (Frame_1A, ..., Frame_2B) ein nachfolgend dargestellter Code (Frame_1A, ..., Frame_2B) in Bezug auf den jeweils zuvor dargestellten Code (Frame_1A, ..., Frame_2B) mit einer geänderten Ausrichtung dargestellt wird, und wobei vor einer Decodierung eines Codes (Frame_1A, ..., Frame_2B) einer Aufnahme (P1, ..., P17) jeweils die Ausrichtung des Codes (Frame_1A, ..., Frame_2B) in der jeweiligen Aufnahme (P1, ..., P17) ermittelt wird, wobei eine Decodierung nur in den Fällen durchgeführt wird, in denen der erfasste Code (Frame_1A, ..., Frame_2B) eine in Bezug auf den zuletzt erfolgreich decodierten Code (Frame_1A, ..., Frame_2B) geänderte Ausrichtung aufweist. Durch dieses Verfahren bzw. Vorrichtung kann die Verarbeitungsgeschwindigkeit erhöht werden bzw. die Rechenlast für ein Auswertegerät verringert werden, indem eine unnötige vollständige Decodierung, also die unnötige Wiedergewinnung des Nutzinhalts, dann vermieden wird, wenn derselbe zweidimensionale Code (Frame) bereits ausgewertet wurde.

## Beschreibung

Die Erfindung betrifft ein Verfahren zur Erfassung einer Mehrzahl nacheinander auf eine Anzeigevorrichtung dargestellter zweidimensionaler Codes gemäß dem Oberbegriff des Patentanspruchs 1, ein Lesegerät für eine Mehrzahl nacheinander auf eine Anzeigevorrichtung dargestellter zweidimensionaler Codes gemäß dem Oberbegriff des Patentanspruchs 8, sowie ein entsprechendes Computerprogrammprodukt gemäß dem Oberbegriff des Patentanspruchs 15.

Zur Informationsbereitstellung und Informationsübertragung auf technische Geräte werden oft sog. "optische Codes" verwendet, also Darstellungen, die maschinenlesbar sind und im Vergleich mit Klartext oft leichter zu verarbeiten sind, eine höhere Redundanz aufweisen ("Robustheit") und oft auch eine höhere Informationsdichte enthalten. Ein bekanntes Beispiel für einen "eindimensionalen" optischen Code ist der bekannte Strichcode, auch Barcode genannt, wobei eine Anzahl Zeichen in eine Abfolge von Balken verschiedener Breite codiert wird. Bekannt sind Strichcodes beispielsweise von Verpackungen im Einzelhandel (EAN - Einzelhandels-Artikel-Nummerierung).

Zwischenzeitlich werden vermehrt zweidimensionale Codes eingesetzt, deren bekanntester Vertreter der "Quick Response Code" (QRC) ist, der von der Fa. Denso entwickelt wurde. Bekannt sind diese QRC's dadurch, dass in Zeitschriften und auf anderen Publikationen damit URLs für den Zugriff auf weitere Informationen publiziert werden. Außerdem sind solche und andere zweidimensionale Codes von Bahn-Tickets, Bordkarten im Flugverkehr, aus Warenflusssystemen und von zahlreichen anderen Anwendungen bekannt.

Während für die bekannten Barcodes häufig spezielle Lesegeräte eingesetzt werden, die beispielsweise auf LED-Technik oder auf Laser-Technik basieren (beispielsweise an Supermarktkassen), werden die zweidimensionalen Codes häufig von Lesegeräten erfasst, die eine herkömmliche Kamera enthalten. So werden die als QRC-Codes dargstellten URLs in Zeitschriften etc. häufig mit Mobiltelefonen abfotografiert, wobei die Mobiltelefone ein spezielles Programm, meist eine sog. "App", zur Auswertung und zur Verzweigung zur entsprechend hinterlegten URL umfassen. Dabei wird zunächst das Bild mit einer Kamera erfasst, wonach eine Bildregion ermittelt wird, die den zweidimensionalen Code enthält. Dieser wird digitalisiert, wobei ein Schwellenwert festgestellt werden muss, der zur Unterscheidung zwischen den binären Zuständen (logische Null, logische Eins) dient. Damit wird also die Bildregion mit dem zweidimensionalen Code in eine "Strichdarstellung", also in eine binäre Darstellung, übersetzt. Danach wird der Bildausschnitt mit dem Code in eine definierte Ausrichtung gedreht, wonach schließlich durch eine Auswerteeinrichtung die optisch erfassten Informationen zu den Nutzdaten decodiert werden.

Die zweidimensionalen Codes enthalten dazu regelmäßig Merkmale, anhand derer die Ausrichtung der Darstellung in Bezug auf eine Bezugsebene oder Bezugsachse festgestellt werden kann. Damit ist es möglich, einen mit beliebiger Ausrichtung der Kamera aufgenommenen optischen Code derart zu drehen bzw. neu auszurichten, dass er ausgewertet werden kann.

Weitere optische Merkmale sorgen dafür, dass Verzerrungen der Darstellung in der Aufnahme erkannt und korrigiert werden können, so dass auch bei perspektivisch verzerrter Aufnahme und bei anderen geometrischen Mängeln der ursprüngliche Code wiederhergestellt und ausgelesen bzw. ausgewertet, also decodiert, werden kann.

Die zweidimensionalen Codes sind regelmäßig mit einer Redundanz versehen; dies bedeutet, dass auch bei einzelnen Fehlern in der Aufnahme der Nutzinhalt noch wiederhergestellt werden kann. Bei den genannten QR-Codes sind verschiedene Redundanzstufen erzeugbar; je nach eingesetzter Stufe können bis zu 30% Verlust ausgeglichen werden. Sofern Störungen auftreten, die nicht mehr ausgeglichen werden können, muss die Erfassung des Codes wiederholt werden; gebräuchliche Lesegeräte geben einem Bediener eine Rückmeldung darüber, ob ein Lesevorgang erfolgreich war, oder nicht.

Die in einem zweidimensionalen Code codierbare Datenmenge hängt von der Größe des Codes und von der eingestellten Redundanzstufe ab, ist aber natürlich generell beschränkt. Daher ist bei vielen zweidimensionalen Codes, unter anderem auch im erwähnten Quick-Response-Code-Standard, vorgesehen, mehrere Codes zu einem Gesamtdatensatz zusammenzufassen. Diese können beispielsweise nebeneinander oder untereinander gedruckt sein und nacheinander von einem Lesegerät erfasst werden, wobei das Lesegerät dann beispielsweise anhand einer fortlaufenden Kennung die einzelnen Datensätze zu einem Gesamt-Datensatz zusammenfügt. Analog dazu ist es auch möglich, an derselben Stelle einer Anzeigeeinrichtung (z.B. Bildschirm) eine Abfolge zusammengehöriger zweidimensionaler Codes darzustellen, wobei jedoch ein entsprechend leistungsfähiges Lesegerät vorgesehen sein muss, um mit einer entsprechenden Auswerte-Rate die Abfolge von Codes lesen und auswerten zu können. Um sicherzustellen, dass die gesamte Abfolge von zweidimensionalen Codes sicher erfasst wird, ist es dabei üblich, mit einer höheren Auswerte-Rate zu arbeiten, als die Änderungsrate der dargestellten Codes. Dies ist insbesondere deshalb wichtig, weil eine feste Synchronisierung zwischen darstellendem und auswertendem Gerät nicht gewährleistet werden kann, so dass meist mindestens mit doppelter, oft aber sogar noch häufigerer "Überabtastung" gearbeitet wird. Diese ist auch wegen der Tatsache, dass einzelne Aufnahmen fehlerhaft und nicht decodierbar sein können, wichtig. Während bei industriellen Anwendungen dafür entsprechend leistungsfähige Lesegeräte, insbesondere mit entsprechend leistungsfähigen Auswerteinrichtungen, vorgesehen werden, sind einfache Lesegeräte, insbesondere die von Konsumenten oft verwendeten "Smartphones" oft nicht in der Lage, die durch eine Abfolge von zweidimensionalen Codes übertragenen "Datenströme" bei mehrfacher Überabtastung mit ausreichender Geschwindigkeit zu verarbeiten. Eine entsprechend niedrigere Auswerterate sorgt jedoch für eine höhere Fehleranfälligkeit.

Es ist also eine Aufgabe der vorliegenden Erfindung, Datensätze und Datenströme, die mittels einer Abfolge zweidimensionaler Codes dargestellt werden, auch mit wenig leistungsfähigen Lesegeräten zuverlässig auszulesen.

Es ist eine Kernidee zur Lösung der Aufgabe, das in einem Auswertegerät Rechenzeit eingespart werden kann und somit auch weniger leistungsfähige Auswertegerät bzw. Lesegeräte eingesetzt werden können, wenn unnötige Auswertevorgänge unterbleiben. Bei einer "Überabtastung", also bei einer höheren Erfassungsrate im Vergleich zur Wechselrate der dargestellten zweidimensionalen Codes, braucht also erfindungsgemäß ein Code zur dann vollständig decodiert werden, wenn er sich vom zuletzt erfolgreich decodierten Code unterscheidet, also zwischenzeitlich ein Wechsel stattgefunden hat. Bei den gebräuchlichen Datensätzen, die auf mehrere Codes verteilt sind bzw. bei den gebräuchlichen "Datenströmen" aus zweidimensionalen Codes muss im Stand der Technik eine Aufnahme und der darin erteilte Code vollständig ausgewertet werden, um beispielsweise anhand einer fortlaufenden Nummer oder anhand eines anderen Bezeichners, der in dem Code vorhanden ist, festzustellen, ob es sich um einen bereits decodierten Code, also um eine Wiederholungsaufnahme und Wiederholungsauswertung, handelt, oder ob zwischenzeitlich der Code gewechselt hat, also ein nachfolgender "Frame" vorliegt, der vollständig decodiert werden muss. Die Erfindung macht sich nun die Erkenntnis zu Nutze, dass bei den gebräuchlichen zweidimensionalen Codes anhand wesentlicher, leicht auszuwertender geometrischer Merkmale die Ausrichtung des Codes auf einem Bild bzw. zu einer Bezugsachse oder Bezugsebene, festgestellt werden kann. Erfindungsgemäß soll bei jedem Wechsel des Codes in der Darstellung die Ausrichtung geändert werden, so dass nur bei einer gewechselten Ausrichtung davon ausgegangen wird, dass auch der Code gewechselt hat, also ein Folge-Code (Frame) mit einem neuen Inhalt ausgelesen werden muss. Dabei wird vorausgesetzt, dass eine Änderung der perspektivischen Ausrichtung einer Kamera oder eine Drehung einer Kamera in Bezug auf ein Darstellungsgerät langsamer bzw. mit einer geringeren Änderungsrate vorgenommen wird, als eine gewollte Änderung der Ausrichtung in den Darstellungen. Es ist ein weiterer erfindungsgemäßer Aspekt, dass ebenfalls gestützt auf die Annahme, dass sich die äußeren Bedingungen, insbesondere ein Abstand einer Kamera zu einem Darstellungsgerät, die Ausrichtung der Kamera zu einem Darstellungsgerät, die äußere Beleuchtung bzw. Helligkeit der Darstellung etc. nur langsam ändern, so dass für wesentliche, zeitaufwändige Schritte der Auswertung, insbesondere für die Feststellung, in welchem Bereich eines Bildes der Code dargestellt ist, und mit welchem Schwellwert dieser digitalisiert bzw. in eine Strichdarstellung umgesetzt werden kann, von vorhergehenden Auswertungen als Startwerte übernommen werden können, so dass die Anzahl notwendiger Iterationen verringert werden kann. Dadurch ist es möglich, auch mit leistungsschwachen Lesegeräten wie z.B. Mobiltelefonen oder "Smartphones" Datenströme aus zweidimensionalen optischen Codes mit einer vergleichsweise hohen Datenrate auszuwerten.

Die Aufgabe wird insbesondere durch das Verfahren gemäß Patentanspruch 1, das Lesegerät gemäß Patentanspruch 8 und durch ein Gerät, welches mit einem Computerprogrammprodukt gemäß dem Patentanspruch 15 versehen ist, gelöst.

Dabei wird ein Verfahren zur Erfassung einer Mehrzahl nacheinander auf einer Anzeigevorrichtung dargestellter zweidimensionaler Codes vorgeschlagen, wobei die zweidimensionalen Codes mittels einer Mehrzahl Aufnahmen einer Kamera erfasst und mittels einer Auswerteeinrichtung decodiert werden. Dabei ist eine Aufnahmerate der Kamera bei der Erfassung der Aufnahmen mit den Codes höher als eine Wechselrate der dargestellten Codes, wobei bei einem Wechsel des dargestellten Codes ein nachfolgend dargestellter Code in Bezug auf den jeweils zuvor dargestellten Code mit einer geänderten Ausrichtung dargestellt wird, und wobei vor einer Decodierung eines Codes einer Aufnahme jeweils die Ausrichtung des Codes in der jeweiligen Aufnahme ermittelt wird, wobei eine Decodierung nur in den Fällen durchgeführt wird, in denen der erfasste Code eine in Bezug auf den zuletzt erfolgreich decodierten Code geänderte Ausrichtung aufweist. Durch dieses Verfahren kann die Verarbeitungsgeschwindigkeit erhöht werden bzw. die Rechenlast für ein Auswertegerät verringert werden, indem eine unnötige Decodierung, also die unnötige Wiedergewinnung des Nutzinhalts, dann vermieden wird, wenn derselbe zweidimensionale Code (Frame) bereits ausgewertet wurde.

Die Aufgabe wird außerdem durch ein Lesegerät zur Erfassung einer Mehrzahl nacheinander auf einer Anzeigevorrichtung dargestellter zweidimensionaler Codes gelöst, wobei die zweidimensionalen Codes mittels einer Mehrzahl Aufnahmen einer Kamera erfasst werden, und wobei diese mittels einer Auswerteeinrichtung des Lesegeräts decodiert werden. Dabei ist das Lesegerät zur Verarbeitung einer Aufnahmerate der Kamera eingerichtet, wobei die Rate bei der Erfassung der Aufnahmen mit den Codes höher ist, als eine Wechselrate der dargestellten Codes, wobei das Lesegerät darauf eingerichtet ist, dass bei einem Wechsel des dargestellten Codes ein nachfolgend dargestellter Code in Bezug auf den jeweils zuvor dargestellten Code mit einer geänderten Ausrichtung dargestellt ist, und wobei das Lesegerät vor einer Decodierung eines Codes (Frame) einer Aufnahme jeweils zur Ermittlung einer Ausrichtung des Codes (Frames) in der jeweiligen Aufnahme eingerichtet ist, wobei das Lesegerät derart ausgestaltet ist, dass eine Decodierung nur in den Fällen durchgeführt wird, in denen der aktuell erfasste Code (Frame) eine in Bezug auf den zuletzt erfolgreich decodierten Code (Frame) geänderte Ausrichtung aufweist. Ein solches Gerät kann die Vorteile des erfindungsgemäßen Verfahrens realisieren.

Weiter wird die Aufgabe durch ein Computerprogrammprodukt auf einem computerlesbaren Speichermedium oder auf einem durch einen Computer zugreifbaren Server gelöst, mit ausführbarem Programmcode oder mit zu einem ausführbaren Programmcode kompilierbaren Quell- oder Zwischencode, wobei das Computerprogrammprodukt zum Zusammenwirken mit einer Computer-Hardware und einer Kamera oder einem extern erfassten Bilddatenstrom zur Durchführung eines der vorstehend genannten Verfahren ausgebildet ist, sofern der Programmcode auf der Computer-Hardware ausgeführt wird.

Vorteilhafte Ausgestaltungen der Erfindung sind in den abhängigen Patentansprüchen angegeben. Dabei können die vorteilhaften Ausgestaltungen sowohl einzeln als auch in Kombination miteinander realisiert sein. Außerdem gelten die vorteilhaften Ausgestaltungen des Verfahrens sinngemäß auch für das Lesegerät und das Computerprogrammprodukt, und umgekehrt.

Nach einer Erfassung einer Aufnahme wird zunächst eine Bildregion ermittelt, die den übertragenen zweidimensionalen Code enthält. In einer vorteilhaften Ausgestaltung wird dabei die bei einer voran gegangenen Aufnahme ermittelte Bildregion als ein Startwert bei der Ermittlung der Bildregion bei einer aktuell auszuwertenden, nachfolgenden Aufnahme verwendet, so dass der zur Ermittlung der Bildregion erforderliche Rechenaufwand verringert wird und ggf. die Anzahl der erforderlichen Iterationsschritte verringert wird. Gleiches gilt für den bzw. zumindest einen Schwellenwert, der bei Graustufen- und Farbaufnahmen zu einer Umsetzung der Bildregion mit dem zweidimensionalen Code in eine binäre Darstellung (Strichdarstellung) verwendet wird, der also zur Unterscheidung zwischen logischen Nullen und logischen Einsen verwendet wird. Auch hier kann der bei vorangegangenen Aufnahmen verwendete Schwellenwert als ein Startwert für die aktuelle Digitalisierung verwendet werden, weil davon ausgegangen wird, dass sich bei aufeinander folgenden Aufnahmen weder die Bildregion, noch die Belichtung und damit der Schwellenwert signifikant ändern. Bei geringfügigen Änderungen kann die Adaptierung des Schwellenwertes schneller erfolgen oder ist oft sogar unnötig. Die Erfindung bezieht sich dabei auch auf mehrfarbige zweidimensionale Codes, für deren Auswertung dann je eine Schwellwertberechnung im jeweiligen Farb-Spektrum gibt; d.h., dass für jede im Code benutzte Spektralfarbe ein eigener Schwellenwert bestimmt wird. Je nach Auswerte-Verfahren wird dann beispielsweise auch für jede im Code verwendete Spektralfarbe ein separates "Schwarzweiß-Bild" extrahiert (beispielsweise durch digitale Farbfilterung) und separat decodiert.

Vorteilhaft wird als der zweidimensionale Code ein QR-Code verwendet. Bei den bekannten QR-Codes kann nämlich anhand von drei signifikanten Quadraten sehr leicht und damit ohne hohen Rechenaufwand die Ausrichtung des Codes festgestellt werden, ohne diesen komplett decodieren zu müssen. Prinzipiell sind jedoch auch andere zweidimensionale Codes verwendbar. Schließlich sind auch Codes verwendbar, die über die zwei genannten Dimensionen noch weitere umfassen, beispielsweise durch eine räumliche oder mehrfarbige Darstellung. Auch solche mehrdimensionalen Codes umfassen zumindest zwei Dimensionen und können mit dem erfindungsgemäßen Verfahren vorteilhaft verarbeitet werden.

Vorteilhaft wird mittels der Mehrzahl der zweidimensionalen Codes ein Datenstrom und/oder eine über das Datenvolumen eines einzelnen Codes hinausgehende Datenmenge übertragen, wobei mit ansteigender Datenmenge auch die durch das Verfahren erzielbare Verringerung des Aufwands bei der Verarbeitung steigt. In einer vorteilhaften Ausgestaltung ist außerdem die Unterteilung der Codes in sog. "Sets" mit jeweils einer Mehrzahl einzelner Codes möglich, was es unter anderem ermöglicht, komplette Sets mehrfach, also wiederholt zur Darstellung zu bringen, was die "Robustheit" der Datenübertragung vergrößert. Außerdem ist es möglich, die Frames ein- und desselben Sets mit einer auffälligen und somit leicht automatisch auszuwertenden zusätzlichen Markierung zu versehen, so dass leicht zwischen den Codes bzw. Frames unterschiedlicher Sets unterschieden werden kann, ohne die diesbezüglichen Frames jeweils komplett auswerten zu müssen. Dadurch ist es möglich, solche wiederholten Sets komplett zu ignorieren, sofern sie bereits vollständig und erfolgreich empfangen wurden.

Das Verfahren ist besonders dazu geeignet, auf einem Gerät mit vergleichsweise geringer verfügbarer Rechenleistung, wie beispielsweise einem Mobiltelefon (Smartphone), einem Tablet-PC o.ä., realisiert werden. Insbesondere bei Mobiltelefonen, Computern und Tablet-PCs aus dem Consumer-Bereich ist es dabei besonders vorteilhaft möglich, das Verfahren mittels einer sog. "App" (Applikation) zu realisieren, die sich auf einfache Weise installieren und de-installieren lässt. Gerade die für Geräte des Consumer-Bereichs bekannten "Apps" lassen sich durch eine einfache Bedienprozedur auch von Laien installieren und deinstallieren. Alternativ ist auch eine Realisierung des Verfahrens in einer Firmware eines Gerätes oder sogar direkt in einem Bildprozessor einer Kamera möglich.

In einer vorteilhaften Ausgestaltung ist die Kamera Bestandteil des Lesegerätes; das ist beispielsweise bei den modernen "Smartphones" ohnehin meist der Fall. In einer alternativen Ausgestaltung kann jedoch auch ein Auswertegerät (Lesegerät) auf eine Bildfolge (Bilddatenstrom) einer externen Einrichtung oder Kamera zugreifen. Dabei ist es insbesondere möglich, eine Mehrzahl von Kameras in einem Auswertesystem zu betreiben, wobei die Bildauswertung bzw. die Decodierung der resultierenden Bilddatenströme von einer zentralen Einrichtung vorgenommen wird.

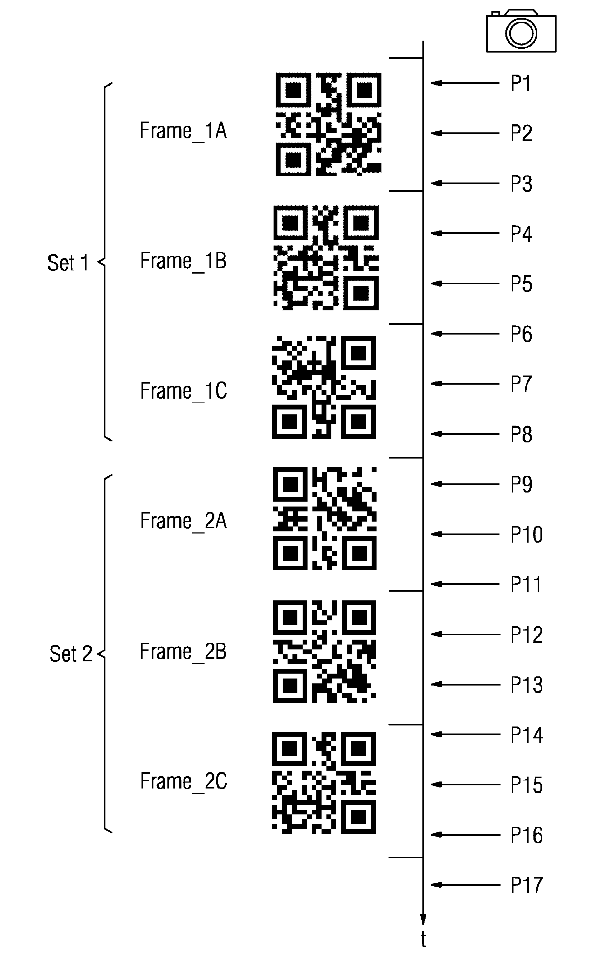

Ein Ausführungsbeispiel des erfindungsgemäßen Verfahrens wird nachfolgend anhand der Zeichnung erläutert. Dieses Ausführungsbeispiel dient gleichzeitig der Erläuterung eines erfindungsgemäßen Lesegerätes und eines erfindungsgemäßen Computerprogrammprodukts.

Dabei zeigt die einzige Figur eine Abfolge von zweidimensionalen Codes (Frames), wobei gleichzeitig die Erfassungszeitpunkte von Aufnahmen einer Kamera dargestellt sind.

In der Figur sind entlang einer Zeitachse t eine Folge von sechs nacheinander dargestellten zweidimensionalen Codes Frame_1A, ..., Frame_2C dargestellt, wobei diese Codes Frame_1A, ..., Frame_2C zeitlich nacheinander für einen jeweils festgelegten Zeitraum auf einer (nicht dargestellten) Anzeigevorrichtung dargestellt werden. Die Codes werden hier zur Übertragung eines Datenstroms verwendet, wobei die hier dargestellten exemplarischen Codes als Nutzinhalt ihre Bezeichnung "Frame_1A" ..."Frame 2C" enthalten. In einer realen Anordnung könnten damit jedoch auch einzelne Bilder, Datensätze etc übertragen werden. Die Codes sind in zwei Sets Set1, Set2 organisiert, was eine später erläuterte optionale Ausführungsform darstellt. Auf der rechten Seite der Figur sind mittels horizontaler Pfeile diejenigen Zeitpunkte auf dem Zeitstrahl t markiert, zu denen eine Aufnahmevorrichtung (Kamera) den Bildschirminhalt der (nicht dargestellten) Anzeigevorrichtung aufnimmt; dabei werden Aufnahmen P1, ..., P17 ("Picture") mittels der Kamera aufgenommen und einer Auswerteeinrichtung (nicht dargestellt) zuführt. Wesentlich ist dabei, dass die Wechselrate der Codes geringer ist als die Aufnahmerate der Kamera; im vorliegenden Beispiel werden also in einer Zeitspanne, in der sechs verschiedene Codes (Frames) dargestellt werden, sechzehn Aufnahmen erzeugt. Dies ist eine exemplarische Darstellung; in einer realen Darstellung kann die Aufnahmerate bezogen auf die Darstellungsrate z.B. noch höher sein, wodurch in einem solchen Fall der positive Effekt des erfindungsgemäßen Verfahrens noch deutlicher zu Tage tritt.

Nun sei angenommen, dass die erste Aufnahme P1 erzeugt und der Auswerteeinrichtung zugeführt wird. Dazu wird zunächst in einem größeren Bild, nämlich der kompletten Aufnahme, die Bildregion mit dem Code Frame_1A gesucht und aufgefunden. Danach wird ein Schwellenwert zur Digitalisierung des dargestellten Musters ermittelt, wobei der Schwellenwert so bemessen sein muss, dass aus einer farbigen Aufnahme oder einer Graustufen-Aufnahme sich das in der Figur dargestellte Muster mit nur 2 Zuständen (Schwarzweiß-Muster) ergibt. In einem hier nicht weiter diskutierten Schritt werden außerdem perspektivische Verzerrungen, Kissen-Verzerrungen o.ä. korrigiert. Anhand der drei großen Quadrate in den Ecken links oben, links unten und rechts oben kann nun die Ausrichtung des "Frames" festgestellt werden; dazu kann beispielsweise aus den drei schwarzen Quadraten ein Dreieck gebildet werden. Sofern dieses Dreieck nicht gleichschenkelig ist, liegt eine perspektivische Verzerrung vor, die korrigiert werden muss; folglich kann der Schritt der perspektivischen Verzerrung mit dem Schritt der Feststellung der Ausrichtung zusammengefasst werden. Sofern die Ausrichtung nicht einem Standard entspricht, beispielsweise der anhand des Codes Frame_1A gezeigten Ausrichtung, wird der bearbeitete Bildausschnitt jetzt noch derart gedreht, dass sich die "Standard-Ausrichtung" ergibt. Anschließend wird der bearbeitete Code durch die Auswerteeinrichtung decodiert, d.h., dass der Nutzinhalt (hier: "Frame 1A") wieder hergestellt wird. Insoweit entspricht die Verarbeitung der Aufnahme dem Stand der Technik.

Erfindungsgemäß wird während der Verarbeitung dieses ersten Codes Frame_1A eine Speicherung der (ursprünglichen) Ausrichtung vorgenommen, beispielsweise in Form eines Winkels (Wert zwischen 0° und 30°), gegen den der dargestellte Code Frame_1A in der Aufnahme gegenüber der "Standard-Lage" verdreht war. Für vorteilhafte Ausgestaltungen der Erfindung werden weiter auch während der Verarbeitung die Schwellenwerte für die Umsetzung eines Farbbildes oder eines Graustufen-Bildes in eine auswertbare Form, beispielsweise in eine Strichgrafik (Schwarzweiß-Umsetzung), und eine Information über das Bildsegment gespeichert, in dem der Code Frame_1A aufgefunden wurde, beispielsweise anhand der Bezeichnung eines Quadranten oder anhand absoluter Bildkoordinaten. Optional können auch Parameter für die Korrektur von Verzerrungen gespeichert und bei späteren Aufnahmen wiederverwendet werden.

Im Folgenden sei angenommen, dass die anhand der Aufnahme P1 vorgenommene Decodierung erfolgreich war; dies bedeutet, dass anhand einer Check-Summe, "CRC" (CRC = Cyclic Redundancy Check) o.ä. verifiziert wurde, dass der Nutzinhalt "Frame 1A" richtig erfasst wurde. Nun wird die nachfolgende Aufnahme P2 ausgewertet. Dies geschieht in analoger Weise zu der Aufnahme P1, und zwar bis zu dem Schritt, bei dem die Ausrichtung des Codes festgestellt wird. Da es sich bei der Aufnahme P2 um denselben dargestellten Frame, also den Code Frame_1A, handelt, ist dieser in Bezug auf die vorhergehende Aufnahme P1 auch gleichartig ausgerichtet. Abweichungen können beispielsweise darin resultieren, dass eine Kamera manuell gehalten wird oder sich die Kamera und die Anzeigevorrichtung aus anderen Gründen unbeabsichtigt gegeneinander verdrehen. Der Unterschied (Differenz) zwischen der Ausrichtung des Codes Frame_1a in den Aufnahmen P1 und P2 wird daher mit einem Grenzwert verglichen, beispielsweise 20°. Sofern dieser Grenzwert unterschritten ist, geht ein Lesegerät oder einer Auswerteinrichtung davon aus, dass es sich um ein- und denselben Code Frame_1A handelt, so dass eine weitere Auswertung, insbesondere eine vollständige Decodierung des Inhaltes, nicht vorgenommen werden muss. Der Grenzwert (hier: 20°) wird dabei derart festgesetzt, dass üblicher Weise auftretende unbeabsichtigte Verdrehungen zwischen zwei aufeinander folgenden Aufnahmen außer Betracht bleiben können, andererseits jedoch beabsichtigte Änderungen der Ausrichtung zwischen den Codes Frame_1A, ..., Frame_2C sehr wohl festgestellt werden können. Vorteilhaft kann sich solch ein Grenzwert auch "adaptiv" im laufenden Betrieb automatisch bestimmen und einstellen bzw. nachführen lassen.

Nach Abbruch der Auswertung der Aufnahme P2 wird nun in gleicher Weise die Aufnahme P3 verarbeitet, wobei sich ebenso keine signifikante Änderung der Ausrichtung feststellen lässt, weil weiterhin der Bildinhalt der Aufnahme P3 den Code Frame_1A zeigt. Dies ist jedoch anders bei der Aufnahme P4. Hier wird bei der Auswertung festgestellt, dass das "fehlende" Quadrat nicht mehr rechts unten, sondern links unten in der Darstellung angeordnet ist, was einer Drehung von 90° entspricht, und die damit höher ist, als der festgelegte Grenzwert von 20°. Somit wird davon ausgegangen, dass es sich um einen "neuen", also noch nicht gelesenen Code Frame_1B handelt, der somit vollständig decodiert werden muss. Sofern die Decodierung fehlschlägt, beispielsweise aufgrund mangelnder Bildqualität, wird dies anhand der Aufnahme P5 noch einmal versucht. Anderenfalls, also in dem Fall, in dem die Aufnahme P4 erfolgreich ausgewertet werden konnte, stoppt die Verarbeitung der Aufnahme P5 an der Stelle, an der festgestellt wird, dass gegenüber der zuletzt erfolgreich ausgewerteten Aufnahme P4 keine signifikant geänderte Ausrichtung des dargestellten Codes Frame_1B gegeben ist.

Das Verfahren wird nun weiter durchgeführt, wobei in einer vorteilhaften Ausgestaltung nach der Darstellung und Erfassung, der Frame-Gruppe Set 1 dieser auch aus Sicherheitsgründen noch einmal wiederholt werden kann.

Obwohl die dargestellte Decodierung anhand des QR-Codes (Quick-Respond-Code) erläutert wurde, kommen selbstverständlich auch andere zweidimensionale Codes in Frage. Selbst solche Codes, deren räumliche Ausrichtung nicht anhand äußerer Merkmale bestimmt werden kann, können bei der Darstellung auf einer Anzeigevorrichtung außerhalb des eigentlichen Codes Elemente hinzugefügt werden, anhand derer eine Ausrichtung definiert bzw. eine Änderung der Ausrichtung dedektiert werden kann. So wäre es sogar bei einem - theoretisch - rotationssymmetrischen Code möglich, bei der Anzeige eines ersten "Frames" an einer ersten Stelle, beispielsweise bei 0° (oben), außerhalb des eigentlichen Frames einen deutlichen Punkt, Quadrat o.ä. darzustellen, während bei einem nachfolgenden Frame dieser Punkt an einer anderen Stelle, beispielsweise bei 45°, angezeigt würde. Eine solchermaßen erweiterte Darstellung wäre dennoch durch ein nicht-erfindungsgemäßes Lesegerät lesbar, weil eben die Markierung der Ausrichtung außerhalb des "Nutzbereichs" des Codes vorgenommen würde und somit bei der Auswertung nicht stört. Mit anderen Worten: die Anwendung des erfindungsgemäßen Verfahrens führt auch bei a priori weniger geeigneten Codes nicht dazu, dass ein solcher Code entgegen dem jeweiligen Standard verändert werden müsste.

In vorteilhaften Ausgestaltungen werden, wie gesagt, die bei voran gegangenen Auswertungen festgestellten Schwellenwerte und Bildsegmente/Quadranten o.ä. vorteilhaft als Startwerte oder Anhaltspunkte für nachfolgende Auswertungen verwendet. Durch alle diese Maßnahmen findet eine Beschleunigung der Auswertung statt, so dass die dabei "eingesparte" Rechenzeit für andere Prozesse eines Gerätes genutzt werden kann oder wobei entsprechend weniger leistungsfähige Hardware überhaupt erst eingesetzt werden kann. Die beschriebene Erkennung und Verwerfung von "Duplikaten" erfolgt dabei sehr schnell, da zuerst - im Beispiel des QR-Codes - die drei Positionsquadrate ausgelesen werden, wobei eine "fehlende" Rotation um beispielsweise 90° zwischen zwei Bildern (Aufnahmen) Duplikate schon vor einer vollständigen Decodierung schnell erkennen lässt. In alternativen Ausführungsformen können auch andere "Verdrehungs-Schritte" als die hier beispielhaft beschriebenen 90° eingesetzt werden; dies gilt insbesondere dann, wenn von einer quasi-stationären Ausrichtung der Kamera zu einer Anzeigevorrichtung ausgegangen werden kann. Im letztgenannten Fall können die gewollten Veränderungen weniger ausgeprägt sein; andererseits ist es bei quadratischen oder rechtwinkeligen Codes vorteilhaft, wenn diese orthogonal zu den Kanten einer Anzeigeeinrichtung (Monitor, Display, etc.) angezeigt werden, weil in solchen Fällen die durch die Darstellung in Form von einzelnen Bildpunkten (Pixeln) bedingten Verzerrungen am geringsten sind.

## Patentansprüche

1. Verfahren zur Erfassung einer Mehrzahl nacheinander auf einer Anzeigevorrichtung dargestellter zweidimensionaler Codes (Frame_1A, ..., Frame_2B),
wobei die zweidimensionalen Codes (Frame_1A, ..., Frame_2B) mittels einer Mehrzahl Aufnahmen (P1, ..., P17) einer Kamera erfasst und mittels einer Auswerteinrichtung decodiert werden,
**dadurch gekennzeichnet,**
**dass** eine Aufnahmerate der Kamera bei der Erfassung der Aufnahmen (P1, ..., P17) mit den Codes (Frame_1A, ..., Frame_2B) höher ist als eine Wechselrate der dargestellten Codes (Frame_1A, ..., Frame_2B),
**dass** bei einem Wechsel des dargestellten Codes (Frame_1A, ..., Frame_2B) ein nachfolgend dargestellter Code (Frame_1A, ..., Frame_2B) in Bezug auf den jeweils zuvor dargestellten Code (Frame_1A, ..., Frame_2B) mit einer geänderten Ausrichtung dargestellt wird, und
**dass** vor einer Decodierung eines Codes (Frame_1A, ..., Frame_2B) einer Aufnahme (P1, ..., P17) jeweils die Ausrichtung des Codes (Frame_1A, ..., Frame_2B) in der jeweiligen Aufnahme (P1, ..., P17) ermittelt wird, wobei eine Decodierung nur in den Fällen durchgeführt wird, in denen der erfasste Code (Frame_1A, ..., Frame_2B) eine in Bezug auf den zuletzt erfolgreich decodierten Code (Frame_1A, ..., Frame_2B) geänderte Ausrichtung aufweist.

2. Verfahren nach Patentanspruch 1,
**dadurch gekennzeichnet,**
**dass** nach der Erfassung einer Aufnahme (P1, ..., P17) in der Aufnahme (P1, ..., P17) jeweils eine Bildregion mit dem Code (Frame_1A, ..., Frame_28) ermittelt wird, wobei die bei einer vorangegangenen Aufnahme (P1, ..., P17) ermittelte Bildregion als ein Startwerte bei der Ermittlung der Bildregion bei einer nachfolgenden Aufnahme (P1, ..., P17) verwendet wird.

3. Verfahren nach einem der vorhergehenden Patentansprüche,
**dadurch gekennzeichnet,**
**dass** nach einer Erfassung einer Aufnahme (P1, ..., P17) zur Konvertierung des erfassten Codes (Frame_1A, ..., Frame_2B) in eine binäre Darstellung zumindest ein Schwellenwert für eine Unterscheidung zwischen den binären Zuständen ermittelt wird, wobei
der bei einer vorangegangenen Aufnahme (P1, ..., P17) ermittelte Schwellenwert als ein Startwert für die Ermittlung des Schwellenwertes bei einer nachfolgenden Aufnahme (P1, ..., P17) verwendet wird.

4. Verfahren nach einem der vorhergehenden Patentansprüche,
**dadurch gekennzeichnet,**
**dass** als der zweidimensionale Code (Frame_1A, ..., Frame_2B) ein QR-Code verwendet wird.

5. Verfahren nach einem der vorhergehenden Patentansprüche,
**dadurch gekennzeichnet,**
**dass** mittels der Mehrzahl der Codes (Frame_1A, ..., Frame_2B) ein Datenstrom und/oder eine über das Datenvolumen eines einzelnen Codes (Frame_1A, ..., Frame_2B) hinausgehende Datenmenge übertragen wird.

6. Verfahren nach einem der vorhergehenden Patentansprüche,
**dadurch gekennzeichnet,**
**dass** die Codes (Frame_1A, ..., Frame_2B) in Sets (Set1, Set2) mit jeweils einer Mehrzahl Codes (Frame_1A, ..., Frame_28) organisiert sind, wobei
zur Erhöhung einer Redundanz einer Datenübertragung die Sets (Set1, Set2) jeweils mehrfach nacheinander angezeigt und erfasst werden.

7. Verfahren nach einem der vorhergehenden Patentansprüche,
**dadurch gekennzeichnet,**
**dass** zur Erfassung und zur Auswertung der Codes (Frame_1A, ..., Frame_2B) ein Mobiltelefon verwendet wird.

8. Lesegerät zur Erfassung einer Mehrzahl nacheinander auf einer Anzeigevorrichtung dargestellter zweidimensionaler Codes (Frame_1A, ..., Frame_2B),
wobei die zweidimensionalen Codes (Frame_1A, ..., Frame_2B) mittels einer Mehrzahl Aufnahmen (P1, ..., P17) einer Kamera erfasst werden, und
wobei diese mittels einer Auswerteeinrichtung des Lesegerätes decodiert werden,
**dadurch gekennzeichnet,**
**dass** das Lesegerät zur Verarbeitung der Aufnahmen (P1, ..., P17) mit einer Aufnahmerate der Kamera eingerichtet ist, wobei die Aufnahmerate bei der Erfassung der Aufnahmen (P1, ..., P17) mit den Codes (Frame_1A, ..., Frame_2B) höher ist als eine Wechselrate der dargestellten Codes (Frame_1A, ..., Frame_2B), dass das Lesegerät darauf eingerichtet ist, dass bei einem Wechsel des dargestellten Codes (Frame_1A, ..., Frame_2B) ein nachfolgend dargestellter Code (Frame_1A, ..., Frame_2B) in Bezug auf den jeweils zuvor dargestellten Code (Frame_1A, ..., Frame_2B) mit einer geänderten Ausrichtung dargestellt ist, und
**dass** das Lesgerät vor einer Decodierung eines Codes (Frame_1A, ..., Frame_2B) einer Aufnahme (P1, ..., P17) jeweils zur Ermittlung einer Ausrichtung des Codes (Frame_1A, ..., Frame_2B) in der jeweiligen Aufnahme (P1, ..., P17) eingerichtet ist, und
wobei das Lesegerät derart ausgestaltet ist, dass eine Decodierung nur in den Fällen durchgeführt wird, in denen der aktuell erfasste Code (Frame_1A, ..., Frame_2B) eine in Bezug auf den zuletzt erfolgreich decodierten Code (Frame_1A, ..., Frame_2B) geänderte Ausrichtung aufweist.

9. Lesegerät nach Patentanspruch 8,
**dadurch gekennzeichnet,**
**dass** das Lesegerät derart ausgestaltet ist, dass dieses nach der Erfassung einer Aufnahme (P1, ..., P17) in der Aufnahme (P1, ..., P17) jeweils eine Bildregion mit dem Code (Frame_1A, ..., Frame_2B) ermittelt, wobei das Lesgerät die bei einer vorangegangenen Aufnahme (P1, ..., P17) ermittelte Bildregion als ein Startwert bei der Ermittlung der Bildregion bei einer nachfolgenden der Aufnahmen (P1, ..., P17) verwendet.

10. Lesegerät nach einem der Patentansprüche 8 oder 9,
**dadurch gekennzeichnet,**
**dass** das Lesegerät derart eingerichtet ist, dass nach einer Erfassung einer Aufnahme (P1, ..., P17) zur Konvertierung des erfassten Codes (Frame_1A, ..., Frame_2B) in eine binäre Darstellung ein Schwellenwert für eine Unterscheidung zwischen den binären Zuständen ermittelt wird, wobei das Lesegerät zur Verwendung des bei einer vorangegangenen Aufnahme (P1, ..., P17) ermittelten Schwellenwertes als ein Startwert für die Ermittlung des Schwellenwertes bei der Verarbeitung einer nachfolgenden Aufnahme (P1, ..., P17) eingerichtet ist.

11. Lesegerät nach einem der Patentansprüche 8 bis 10,
**dadurch gekennzeichnet,**
**dass** das Lesegerät zur Verarbeitung von QR-Codes als die zweidimensionalen Codes (Frame_1A, ..., Frame_2B) eingerichtet ist.

12. Lesegerät nach einem der Patentansprüche 8 bis 11,
**dadurch gekennzeichnet,**
**dass** das Lesegerät als ein Mobiltelefon ausgestaltet ist.

13. Lesegerät nach einem der Patentansprüche 8 bis 12,
**dadurch gekennzeichnet,**
**dass** die Kamera ein Bestandteil des Lesegerätes ist.

14. Lesegerät nach einem der Patentansprüche 8 bis 12,
**dadurch gekennzeichnet,**
**dass** das Lesegerät zum Empfang eines Bilddatenstroms von einer externen Kamera eingerichtet ist, wobei die einzelnen Bilder des Bilddatenstroms als die Aufnahmen (P1, ..., P17) verwendet werden.

15. Computerprogrammprodukt auf einem Computer-lesbaren Speichermedium oder auf einem durch einen Computer zugreifbaren Server,
mit ausführbarem Programmcode oder mit zu einem ausführbaren Programmcode kompilierbaren Quell- oder Zwischencode, **dadurch gekennzeichnet,**
**dass** das Computerprogrammprodukt beim Zusammenwirken mit einer Computer-Hardware und einer Kamera oder einem extern erfassten Bilddatenstrom zur Durchführung eines der Verfahren gemäß einem der Patentansprüche 1 bis 7 ausgebildet ist.

16. Computerprogrammprodukt nach Patentanspruch 15,
**dadurch gekennzeichnet,**
**dass** das Computerprogrammprodukt als eine ladbare Applikation ("App"), insbesondere für ein Mobiltelefon oder einen Tablet-PC, ausgeführt ist.
